# EUROPÄISCHE PATENTANMELDUNG

(11) **EP 0 938 115 A2**
(43) Veröffentlichungstag der Anmeldung: **25.08.1999**
(21) Anmeldenummer: 99250039.7
(22) Anmeldetag: 05.02.1999
(51) Int. Cl.: H01H 33/70, H01B 17/32, H02G 5/06

(54) **Isolierstoffbauteil für eine Hochspannungsanlage und Verfahren zu seiner Herstellung**

(30) Priorität: 18.02.1998 DE 19807781
(71) Anmelder: SIEMENS AKTIENGESELLSCHAFT, 80333 München (DE)
(72) Erfinder: Zielke, Eberhard, 12161 Berlin (DE)

(57) **Zusammenfassung**

Bei einem Isolierstoffbauteil (9,14) für eine Hochspannungsanlage mit einem Kern (21,22) und einem Oberflächenbereich (13,19,20) ist vorgesehen, daß der Oberflächenbereich aus einem aufgeschäumten Isolierstoff besteht.

## Beschreibung

Die Erfindung bezieht sich auf ein Isolierstoffbauteil mit einem Kern und wenigstens einem Oberflächenbereich für eine Hochspannungsanlage.

Ein derartiges Isolierstoffbauteil ist beispielsweise aus der DE-OS 195 19 992 bekannt. Dort ist beispielsweise innerhalb eines Hochspannungsleistungsschalters ein Isolierstoffkörper in Form einer Düse aus Polytetrafluoräthylen bekannt, wobei der Isolierstoffkörper an seiner Stirnseite, also in einem dielektrisch besonders stark belasteten Bereich, Unebenheiten in Form von scharfkantigen Nuten und Stegen aufweist, die das Problem entstehender Oberflächenladungen verhindern sollen. Auf einem derartigen hochisolierenden Isolierstoffkörper sammeln sich über lange Zeiträume Oberflächenladungen an, die kurzfristig nicht abfließen können und von denen Teilentladungen ausgehen können. Durch spitze bzw. scharfe Kanten soll erreicht werden, daß infolge der dort lokal erhöhten elektrischen Feldstärke, wenn das Isolierstoffbauteil einem elektrischen Feld ausgesetzt ist, Ladungsträger in das umgebende Gas durch das elektrische Feld emitiert werden. Auf diese Weise könnten Oberflächenladungen in einem solchen Bereich abgebaut werden.

Gemäß dem genannten Stand der Technik werden beispielsweise Nuten in die Stirnseite des Isolierstoffkörpers mittels spanender Bearbeitung eingebracht.

Eine solche Behandlung erfordert einen relativ großen Fertigungsaufwand. Außerdem können die geschaffenen scharfen Kanten mit der Zeit durch verschiedenste Einflüsse erosiv abgerundet werden, so daß der gewünschte Effekt verlorengeht.

Aus der DE 30 47 761 Al ist ein Isolierstoffkörper bekannt, der an seiner Oberfläche freigelegte mineralische Füllstoffkörper aufweist, die die Ausbildung leitfähiger Oberflächenbeläge verhindern sollen.

Aus der DE 29 01 528 Al ist ein Isolierstoffkörper bekannt, der einen aufgeschäumten Kern und eine demgegenüber verdichteten Außenbereich mit Schirmrippen aufweist.

Der vorliegenden Erfindung liegt demgegenüber die Aufgabe zugrunde, einen Isolierstoffkörper der eingangs genannten Art zu schaffen, der einfach herzustellen ist und an seiner Oberfläche scharfkantige Unebenheiten dauerhaft aufweist.

Die Aufgabe wird erfindungsgemäß dadurch gelöst, daß der Oberflächenbereich aus einem aufgeschäumten Isolierstoff besteht.

Aufgrund der Aufschäumung im Oberflächenbereich ist dort die Oberfläche des Isolierstoffbauteils uneben, so daß eine Feldemission von Ladungsträgern unterstützt wird. Eine Nachbearbeitung des Isolierstoffbauteils zur Einbringung von Unebenheiten, beispielsweise Abdrehen oder Fräsen, ist gemäß der Erfindung nicht notwendig. Wird die Oberfläche des Isolierstoffbauteils durch Erosion, beispielsweise infolge eines Lichtbogens erodiert, so ergibt sich durch Aufbrechen von Schaumblasen an der Oberfläche im Gegensatz zum Stand der Technik als Ergebnis eine sehr scharfkantige Kontur, die Feldemissionen begünstigt.

Das erfindungsgemäße Isolierstoffbauteil kann ebenso gut eine Isolierstoffdüse für einen Hochspannungsleistungsschalter sein, wobei der Düsenkörper insbesondere an seiner Stirnfläche einen aufgeschäumten Oberflächenbereich aufweisen kann, wie auch ein Isolierstützer für eine gekapselte Schaltanlage oder einen Rohrleiter, der entweder scheibenförmig oder als Säulenstützer ausgebildet sein kann. Denn auch auf solchen Stützern können sich über lange Zeiten Oberflächenladungen aufbauen, die durch die erfindungsgemäße Ausgestaltung des Isolierstoffbauteils abgebaut werden können, oder es kann der Aufbau solcher Oberflächenladungen gänzlich verhindert werden.

Eine vorteilhafte Ausgestaltung der Erfindung sieht vor, daß der Kern aus einem nicht aufgeschäumten Isolierstoff besteht.

Eine solche Ausgestaltung ist insbesondere dann vorteilhaft, wenn das Isolierstoffbauteil tragende Funktionen hat bzw. größere Kräfte übertragen muß oder eine hohe Dichte aufweisen soll. Beispielsweise bei der Isolierstoffdüse eines Hochspannungsleistungsschalters ist es vorteilhaft, ein Isolierstoffbauteil zu verwenden, dessen Kern nicht aufgeschäumt ist, da hohe Löschgasdrucke das Isolierstoffbauteil ansonsten verformen könnten und da ein massives Isolierstoffbauteil eine längere Lebensdauer aufweist, wenn es einem Lichtbogen ausgesetzt wird.

Bei Verwendung eines erfindungsgemäßen Isolierstoffbauteils als Stützer in einer Schaltanlage kann es aus Gründen der Tragfähigkeit notwendig sein, daß der Kern aus einem nicht aufgeschäumten Isolierstoff besteht. Scheibenförmige Isolierstoffstützer werden beispielsweise auch zur Schottung von Gasräumen eingesetzt, was einen möglichen Druckunterschied auf beiden Seiten des Stützers und entsprechende Kräfte zur Folge hat, die der Stützer aushalten muß.

Eine weitere vorteilhafte Ausgestaltung der Erfindung sieht vor, daß der Kern und der Oberflächenbereich aus demselben Material bestehen.

Ein solches Material kann beispielsweise ein Thermoplast sein, der sich besonders leicht aufschäumen läßt oder typischerweise Polytetrafluoräthylen.

Auf diese Weise werden Haftungsprobleme zwischen dem Kern und dem Oberflächenbereich in jedem Fall vermieden.

Es kann weiterhin vorteilhaft vorgesehen sein, daß Hohlräume des aufgeschäumten Isolierstoffs im Oberflächenbereich aufgebrochen sind.

Hohlräume des aufgeschäumten Isolierstoffs in dem Oberflächenbereich können beispielsweise dadurch aufgebrochen werden, daß die Oberfläche des Isolierstoffbauteils beispielsweise durch Sandstrahlen oder sonstige mechanische Bearbeitung teilweise abgetragen wird. Der stehenbleibende Teil des Isolierstoffbauteils weist dann scharfe Spitzen und Kanten in Form der stehengebliebenen Wände der Schaumstoffblasen des aufgeschäumten Isolierstoffs auf, die für die Zwecke der Erfindung vorteilhaft sind.

Außerdem kann vorteilhaft vorgesehen sein, daß wenigstens ein Oberflächenbereich, der einer hohen elektrischen Feldstärke ausgesetzt ist, aus einem aufgeschäumten Isolierstoff besteht. Es kann außerdem vorteilhaft vorgesehen sein, daß der aufgeschäumte Isolierstoff schwach elektrisch leitfähig ist.

Demnach kann es beispielsweise vorgesehen sein, daß bei einer Isolierstoffdüse eines Hochspannungsleistungsschalters der stirnseitige Bereich der Düse, der einer besonders hohen Feldstärke ausgesetzt ist, als aufgeschäumter Oberflächenbereich ausgebildet ist.

Es kann außerdem vorteilhaft vorgesehen sein, daß der aufgeschäumte Isolierstoff schwach elektrisch leitfähig ist.

In diesem Fall werden Ladungsträger nicht nur durch feldinduzierte Emission, sondern auch durch Oberflächenleitung hinreichend schnell abgeführt. Die Abführung der Oberflächenladungen kann auch durch kombinierte Wirkung der schwachen Leitfähigkeit und der Feldemission unterstützt werden, nämlich dadurch, daß die Ladungsträger zunächst über die Oberfläche zur nächsten Spitze hin wandern und dort emittiert werden.

Ein erfindungsgemäßes Verfahren sieht vor, daß zunächst der Kern fertiggestellt und dann in einem Oberflächenbereich aufgeschäumter Isolierstoff aufgebracht wird.

Der Kern kann hierzu in eine Form gesetzt und mit einem Isolierstoff umschäumt werden.

Ein weiteres vorteilhaftes Verfahren sieht vor, daß der Kern und der Oberflächenbereich im wesentlichen aus demselben Material bestehen und als einstückiger Körper gemeinsam hergestellt werden, wobei dem Isolierstoffbauteil in dem Oberflächenbereich ein Stoff beigegeben wird, der eine Aufschäumbarkeit des Materials bewirkt

In diesem Fall kann beispielsweise ein Aufschäummittel bei der Herstellung des Isolierstoffbauteils lokal im Oberflächenbereich mit eingemischt werden, das in einem weiteren Schritt der Herstellung mit aufgeschäumt wird und somit den aufgeschäumten Oberflächenbereich bildet. Das Aufschäumen kann beispielsweise durch Bestrahlung oder durch Wärme hervorgerufen werden.

Es kann außerdem vorteilhaft vorgesehen sein, daß das Material in dem Oberflächenbereich teilweise abgetragen wird, um Hohlräume des aufgeschäumten Isolierstoffs aufzubrechen.

Durch Sandstrahlen oder sonstige mechanische Bearbeitung der Oberfläche können die Gasblasen des aufgeschäumten Isolierstoffs im Oberflächenbereich aufgebrochen werden, so daß scharfkantige Erhebungen dort freigelegt werden.

Im folgenden wird die Erfindung anhand eines Ausführungsbeispiels anhand einer Zeichnung gezeigt und anschließend beschrieben.
Dabei zeigt:
- Figur 1: schematisch den Aufbau der Unterbrechereinheit eines Hochspannungsleistungsschalters,
- Figur 2: den Aufbau eines scheibenförmigen Isolierstoffstützers.

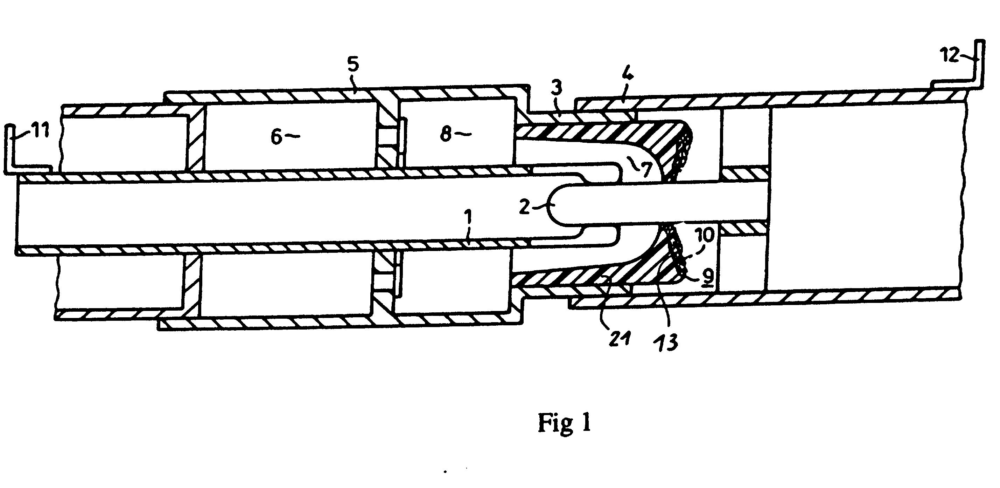

Die Figur 1 zeigt einen Leistungsschalter im Einschaltzustand. Es stehen einander koaxial zwei Lichtbogenkontaktstücke 1,2 sowie zwei Dauerstromkontaktstücke 3,4 gegenüber, die im Einschaltzustand miteinander im Eingriff stehen. Elektrische Anschlüsse des Schalters sind mit 11,12 bezeichnet und nur schematisch dargestellt.

Zum Ausschalten wird das antreibbare Lichtbogenkontaktstück 1 sowie das mit diesem mittels eines Kompressionszylinders 5 verbundene Dauerstromkontaktstück in der Abbildung nach links bewegt. Dies geschieht durch einen nicht näher dargestellten Schaltertrieb.

Gleichzeitig wird in einem Kompressionsraum 6 Löschgas komprimiert. Nach der Trennung der beiden Lichtbogenkontaktstücke 1,2 voneinander entsteht zwischen diesen ein Lichtbogen, der das Löschgas im Bereich des Lichtbogenraumes 7 aufheizt. Vom Lichtbogenraum 7 strömt das heiße Löschgas in den Heizraum 8, wo es für eine nachfolgende Beblasung des Lichtbogens vorübergehend gespeichert wird. Nachdem das antreibbare Lichtbogenkontaktstück 1 sich von dem feststehenden Lichtbogenkontaktstück 2 getrennt hat, läuft auch die Isolierstoffdüse 9 von dem feststehenden Lichtbogenkontaktstück 2 ab. Die Isolierstoffdüse 9 ist mit dem Kompressionszylinder 5 im Bereich des Dauerstromkontaktes 3 verbunden.

Nachdem die Isolierstoffdüse 9 von dem feststehenden Lichtbogenkontaktstück 2 abgelaufen ist, ist die Stirnseite 10 der Isolierstoffdüse dielektrisch durch das elektrische Feld zwischen den Lichtbogenkontaktstücken 1,2 besonders beansprucht. In diesem Bereich befindet sich der aus einem aufgeschäumten Isolierstoff bestehende Oberflächenbereich 13. Die Isolierstoffdüse 9 bildet somit das erfindungsgemäße Isolierstoffbauteil, wobei der Oberflächenbereich, der aus einem aufgeschäumten Isolierstoff besteht, im Bereich der Stirnseite 10 der Isolierstoffdüse 9 angeordnet ist und der übrige Bereich der Isolierstoffdüse 9 den Kern des Isolierstoffbauteils bildet.

Durch diese Ausgestaltung des Isolierstoffbauteils bzw. der Düse werden Oberflächenladungen im Bereich der Stirnseite 10, die im Ausschaltzsutand des Schalters dem Lichtbogenkontaktstück 2 gegenüberliegt, abgebaut, so daß die Gefahr von Rückzündungen bzw. Teilentladungen verringert ist.

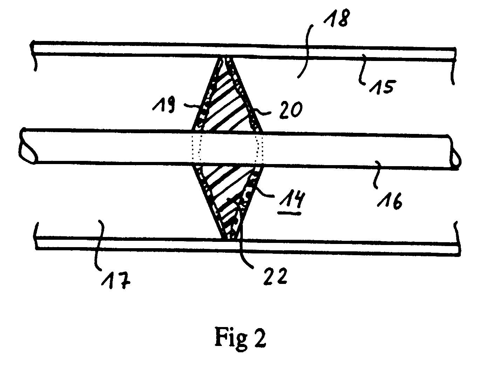

Die Figur 2 zeigt einen Isolierstoffstützer 14 in Scheibenform, der innerhalb eines Kapselungsgehäuses 15 einen Hochspannungsleiter 16 stützt und gleichzeitig zwei Gasräume 17,18 gegeneinander abschottet. Der Isolierstoffstützer 14, der in diesem Fall das erfindungsgemäße Isolierstoffbauteil bildet, weist an seinen Oberflächen beiderseits Oberflächenbereiche 19,20 auf, die aus einem aufgeschäumten Isolierstoff, beispielsweise einem aufgeschäumten Thermoplasten oder aufgeschäumtem PTFE bestehen. Die Oberflächen des Isolierstoffstützers 14 werden nach der Herstellung teilweise abgetragen, um die Hohlräume des aufgeschäumten Isolierstoffs in dem Oberflächenbereich 19,20 aufzubrechen und entsprechend scharfkantige Erhebungen entstehen zu lassen.

Oberflächenladungen, die wegen der hohen Feldstärke zwischen dem Hochspannungsleiter 16 und dem geerdeten Kapselungsgehäuse 15 auf der Oberfläche des Isolierstoffstützers 14 liegen, können somit durch Feldemission schnell abgebaut werden.

## Patentansprüche

1. Isolierstoffbauteil (9,14) mit einem Kern (21,22) und wenigstens einem Oberflächenbereich (13,19,20) für eine Hochspannungsanlage,
**dadurch gekennzeichnet**, daß
der Oberflächenbereich (13,19,20) aus einem aufgeschäumten Isolierstoff besteht.

2. Isolierstoffbauteil nach Anspruch 1,
**dadurch gekennzeichnet**, daß
der Kern (21,22) aus einem nicht aufgeschäumten Isolierstoff besteht.

3. Isolierstoffbauteil nach Anspruch 1 oder 2,
**dadurch gekennzeichnet**, daß
der Kern (21,22) und der Oberflächenbereich (13,19,20) aus demselben Material bestehen.

4. Isolierstoffbauteil nach einem der vorangehenden Ansprüche,
**dadurch gekennzeichnet**, daß
Hohlräume des aufgeschäumten Isolierstoffs im Oberflächenbereich (13,19,20) aufgebrochen sind.

5. Isolierstoffbauteil nach einem der vorangehenden Ansprüche,
**dadurch gekennzeichnet**, daß
wenigstens ein Oberflächenbereich (13,19,20), der einer hohen elektrischen Feldstärke ausgesetzt ist, aus einem aufgeschäumten Isolierstoff besteht.

6. Isolierstoffbauteil nach einem der vorangehenden Ansprüche,
**dadurch gekennzeichnet**, daß
der aufgeschäumte Isolierstoff schwach elektrisch leitfähig ist.

7. Verfahren zur Herstellung eines Isolierstoffbauteils nach einem der vorangehenden Ansprüche,
**dadurch gekennzeichnet**, daß
zunächst der Kern (21,22) fertiggestellt und dann in einem Oberflächenbereich (13,19,20) aufgeschäumter Isolierstoff aufgebracht wird.

8. Verfahren zur Herstellung eines Isolierstoffbauteils nach einem der Ansprüche 1 bis 6,
**dadurch gekennzeichnet**, daß
der Kern (21,22) und der Oberflächenbereich (13,19,20) im wesentlichen aus demselben Material bestehen und als einstückiger Körper gemeinsam hergestellt werden, wobei dem Isolierstoffbauteil (9,14) in dem Oberflächenbereich (13,19,20) ein Stoff beigegeben wird, der eine Aufschäumbarkeit des Materials bewirkt.

9. Verfahren zur Herstellung eines Isolierstoffbauteils nach einem der Ansprüche 1 bis 6,
**dadurch gekennzeichnet**, daß
das Material in dem Oberflächenbereich (13,19,20) teilweise abgetragen wird, um Hohlräume des aufgeschäumten Isolierstoffs aufzubrechen.
